# EUROPEAN PATENT SPECIFICATION

(11) **EP 1 322 011 B1**
(45) Date of publication and mention of the grant of the patent: **05.05.2010**
(21) Application number: 02080044.7
(22) Date of filing: 03.12.2002
(51) Int. Cl.: H02G 3/06, H02G 3/08

(54) **Flush-mounted box for electrical elements**
Einbaudose für elektrische Bauelemente
Boîte d'encastrement pour éléments électriques

(30) Priority: 21.12.2001 BE 200100832
(43) Date of publication of application: 25.06.2003
(73) Proprietor: JVK Plastics, naamloze vennootschap, 2880 Bornem (BE)
(72) Inventor: Verlinde Wille, 8560 Gullegem (BE)
(74) Representative: Donné, Eddy

(56) References cited:
- BE-A- 1 011 833
- US-A- 5 422 437

## Description

This invention relates to a flush-mounted box for electrical elements, more particularly for mounting switches, plug-in sockets and the like in walls.

It is known that flush-mounted boxes for electrical elements in general consist of a box-shaped housing with one or more entrances integrated into the walls of the housing.

It is also known that, when realizing an electrical installation, use can be made of tubes, either rather rigid tubes, or corrugated flexible tubes, in order to provide the electrical conduits in the walls. These tubes mostly are put with their extremities into the entrances of the flush-mounted boxes.

Flexible tubes show the disadvantage that, during the realization of the installation, they are difficult to retain with their extremities in the flush-mounted boxes, which, in its turn, may cause problems, for example, when fastening the whole unit in the wall by means of plaster.

In order to remedy this, it is known to provide, at the location of the entrances of the flush-mounted boxes, locking means which can cooperate with the extremities of the flexible tubes, in the form of locking parts which can engage in the corrugated surface of the flexible tubes. Hereby, locking means are applied with several locking parts, such that the locking means can cooperate with flexible tubes of at least two different diameters.

In those known embodiments, one or more of the locking parts for the tubes of the smallest diameter must be broken off before it is possible to provide a tube of the larger diameter in an entrance. This has as a disadvantage that, when realizing the electrical installation, additional operations have to be performed and valuable time is lost. Another disadvantage consists in that, once the locking parts for the tube of the smallest diameter are broken off, it is subsequently impossible to still fasten a tube of the smallest diameter in the entrance. In that, moreover, use is made of parts which can be broken off, such locking means are little stable. In consideration of the fact that said locking means are situated in the entrance itself, it is also difficult to remove them without damaging other parts of the flush-mounted box.

The present invention aims at a flush-mounted box whereby the aforementioned disadvantages are remedied.

To this aim, the invention relates to a flush-mounted box for electrical elements, of the type which consists of a box-shaped housing with one or more entrances, integrated in the walls of the housing, whereby at least one of those entrances comprises locking means which can cooperate with flexible tubes of at least two different diameters, with as a characteristic that said locking means, in respect to the locking of the flexible tubes with the smaller of said two diameters, as well as in respect to the locking of the flexible tubes with the larger of said two diameters, are of a permanently usable kind.

By using locking means which are of a permanently usable kind, it is at any time possible to fix flexible tubes of the smaller diameter as well as of the larger diameter in the entrance concerned. In consideration of the fact that it is not necessary to break off any locking means, all aforementioned disadvantages of the known embodiments are excluded.

Preferably, said locking means are integrated in an axially protruding, seat-forming edge structure, consisting of one or more parts, which structure extends around said entrance, more particularly in the wall of a so-called sprout piece. By integrating all locking means, thus, the locking parts for locking tubes of the smaller diameter, as well as the locking parts for locking tubes of the larger diameter, into the edge structure, a simple construction is obtained, which moreover does not comprise a lot of sensitive parts.

In the most preferred form of embodiment, the edge structure, and in particular the sprout piece, preferably comprises at least two seats of different diameter for the respective tubes, which seats, according to the axial direction, are situated one behind the other, and the locking means have separate locking parts for the two diameters, which locking parts are situated at the location of said two seats, respectively. Thus, each seat has its own locking parts. In that moreover the seat with the largest diameter is situated next to the free extremity of the sprout piece, flexible tubes of the smaller diameter as well as of the larger diameter can be locked in the sprout piece without any problem.

With the intention of better showing the characteristics of the invention, hereafter, as an example without any limitative character, several preferred forms of embodiment are described, with reference to the accompanying drawings, wherein:
Figure 1 in perspective represents a flush-mounted box according to the invention;
figure 2, at a larger scale, represents a view according to the part indicated by arrow F2 in figure 1;
figure 3 represents a view according to arrow F3 in figure 2;
figures 4 and 5 represent cross-sections, according to lines IV-IV and V-V in figure 2, respectively;
figures 6 to 9 represent cross-sections, analogous to the one of figure 5, however, in different usage applications;
figure 10 represents a front view onto two flush-mounted boxes of the invention which are to be coupled;
figure 11 represents a view analogous to that of figure 2, however, for a variant;
figure 12 represents another variant of the invention.

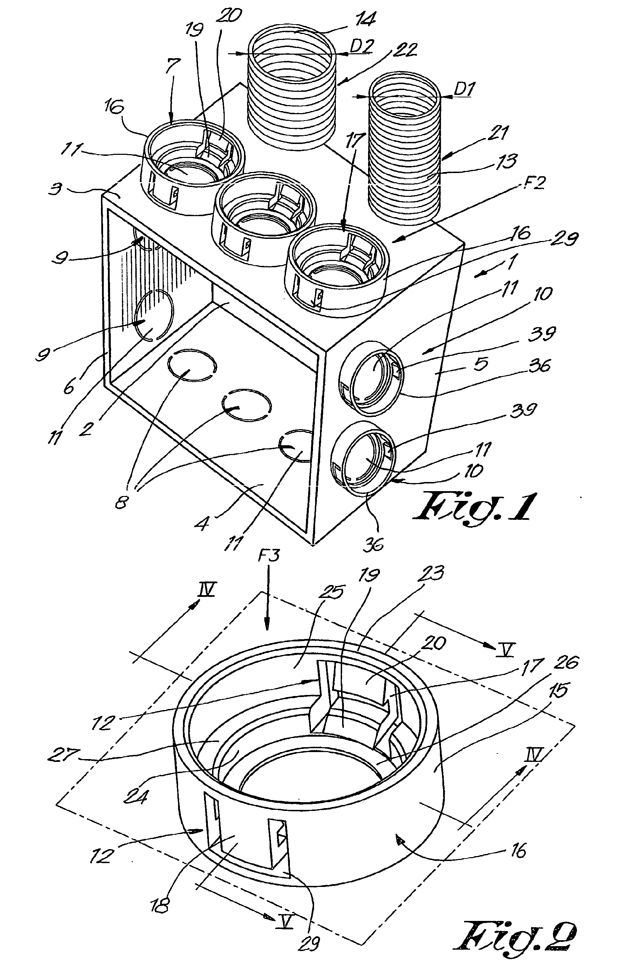

As represented in figure 1, the invention relates to a flush-mounted box 1 for electrical elements. This flush-mounted box 1 consists of a box-shaped housing which is formed of a bottom 2 and, in this case, four side walls 3-4-5-6.

In the housing, several entrances 7-8-9-10 are formed, which, as illustrated, possibly are closed off by means of wall parts 11 which can be broken off.

At the entrances 7 and 8, locking means 12 are formed which can cooperate with flexible tubes 13-14 of at least two different diameters, D1 and D2, respectively, which locking means 12 according to the invention are of a permanently usable kind.

As represented more in detail in figures 2 to 5, these locking means 12 are integrated into the wall 15 of sprout pieces 16 present around the entrances 7-8 and consist, per entrance, of one or more, in this case, two, diametrically opposed elastically bendable lips 17-18, which each are provided with two inwardly protruding locking parts, 19 and 20, respectively. Hereby, the locking parts 19 are situated at such a distance from each other that they can cooperate with the corrugated surface 21 of the aforementioned flexible tube 13 with diameter D1, whereas the locking parts 20 are situated at such a distance from each other that they can cooperate with the corrugated surface 22 of the aforementioned flexible tube 14 with diameter D2.

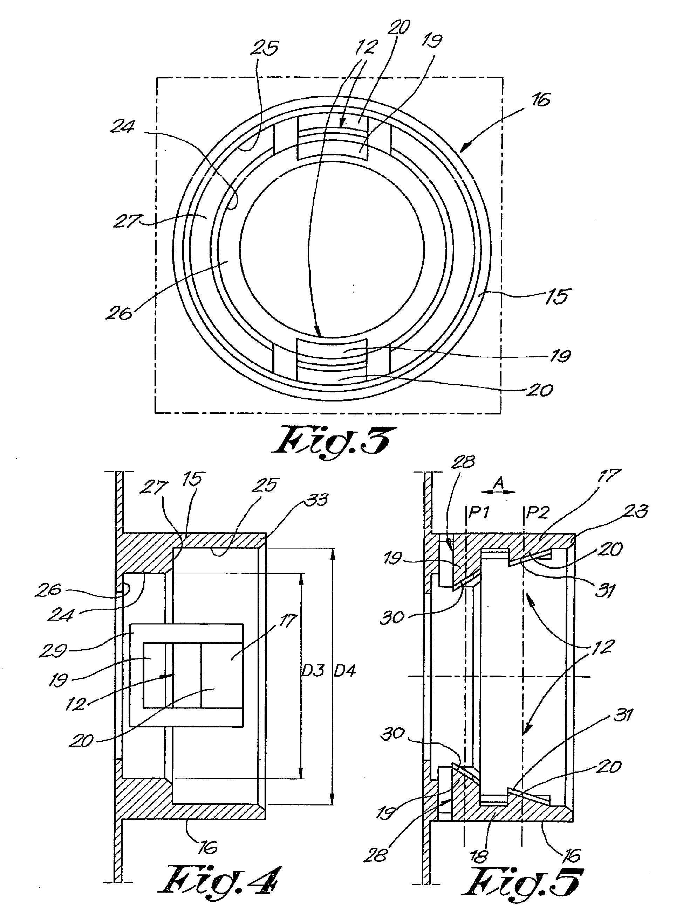

As indicated in figure 5, the locking parts 19 and 20 are situated, in respect to the axial direction A, at different locations, P1 and P2, respectively. Hereby, the locking parts 20 for the tubes 14 with the largest diameter are situated closest to the free edge 23 of the respective sprout piece 26.

Each sprout piece 16 preferably also comprises two seats 24-25, which, in axial direction, are situated one behind the other, and whereby the diameters D3 and D4 thereof are adapted to the aforementioned diameters D1 and D2 and, preferably, substantially coincide therewith. Hereby, the locking parts 19 are situated at the height of the seat 24, whereas the locking parts 20 are situated at the height of the seat 25.

At the height of the seats 24 and 25, axial stops 26 and 27 for tubes, with diameters D1 and D2, respectively, are formed.

In the represented example, the bendable lips 17-18 extend in the axial direction of the sprout piece 16 and are directed with their free extremities 28 towards the box-shaped housing. Hereby, these bendable lips 17-18 substantially are situated in the same cylindrical plane as the wall 15 of the sprout piece 16 and substantially are formed in that a U-shaped recess 29 is formed in this wall 15.

Hereby, the sprout pieces 16 show a foremost free edge 23 which is closed along the entire circumference.

At their front extremity, the locking parts 19 and 20 show an inclined plane, 30-31, respectively, which facilitates the insertion of tubes or flexible tubes 13-14. According to a not represented alternative, such inclined plane also may be formed by a rounded part or such.

The whole unit formed by seats 24-25 and locking means 12 is designed such that, as will be explained in the following, rigid tubes as well as flexible tubes can be provided with their extremities in the sprout pieces 16.

Preferably, the seats 24-25 and the locking means 12 are realized such that, in the seat 24, tubes and flexible tubes having a diameter of 16 mm and/or 5/8 inches can be provided, whereas in the seat 25, tubes can be provided having a diameter of 20 mm and/or 3/4 inches. of course, embodiments for other diameters are not excluded.

The sprout pieces 16, as well as the integrated locking means 12, together with the pertaining wall part of the box-shaped housing, preferably are realized in synthetic material, in one piece.

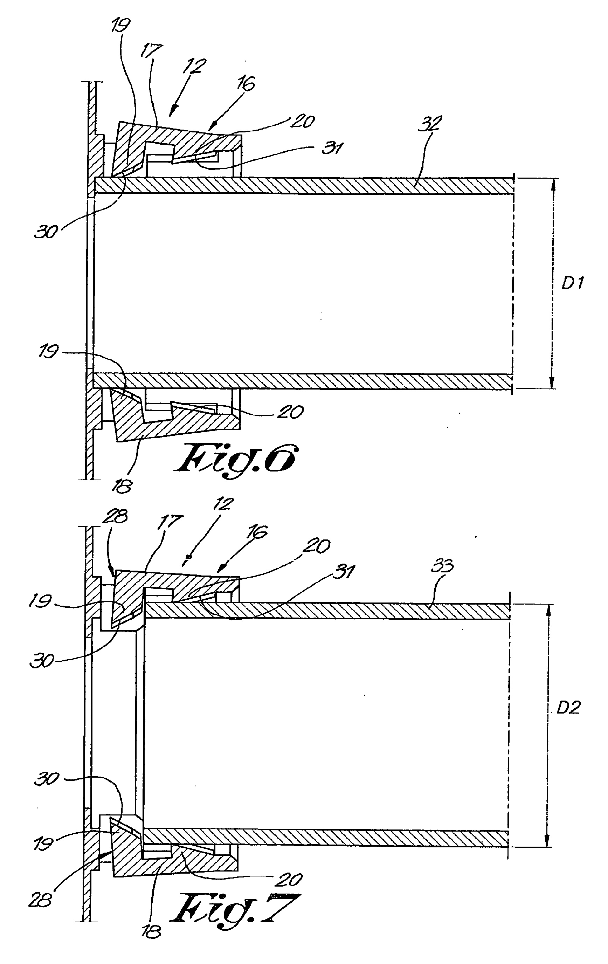

The use of the flush-mounted box 1, more particularly the connection of a tube in the sprout pieces 16 described in the aforegoing, will be explained in the following, with reference to figures 6 to 9.

Figure 6 represents how a rigid tube 32 with a diameter D1 fits into the seat 24. Hereby, the lips 17-18 are bent sideways and thereby exert a clamping effect upon the tube 32.

Figure 7 represents how a rigid tube 33 with a diameter D2 fits into the sprout piece 16. This tube 33 fits exclusively into the seat 25 and can be pushed with its extremity up to the stop 27. In this case, too, the lips 17-18 are bent sideways and thereby exert a clamping effect upon the tube 33.

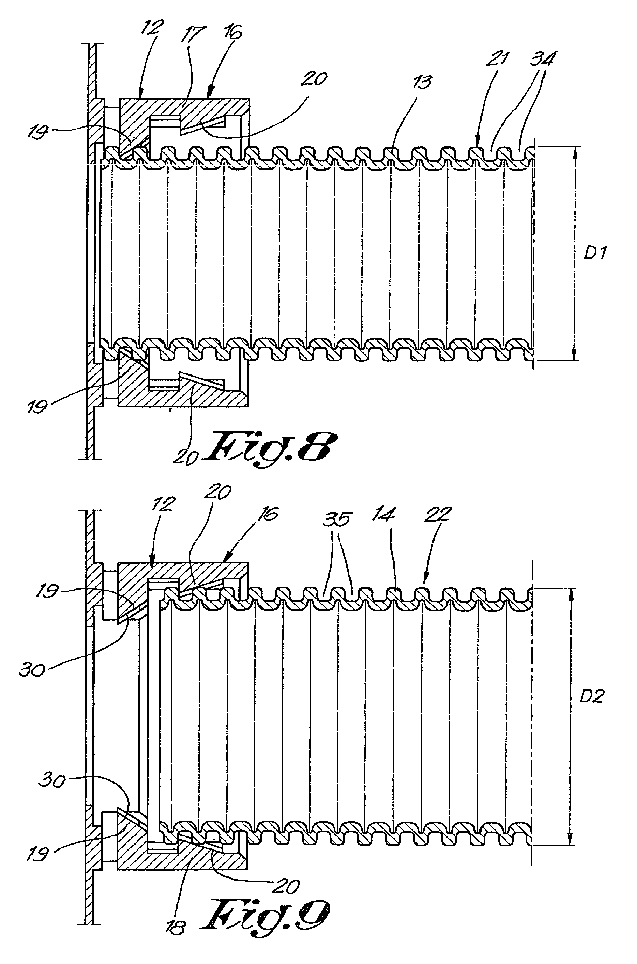

Figure 8 represents how a flexible tube 13 with diameter D1 is locked in the sprout piece 16. To this aim, this tube 13 is slid into the sprout piece 16, resulting in that the locking parts 19 first are pushed sideways and subsequently elastically engage in one of the grooves 34 of the corrugated surface 21, as a result of which, as illustrated in figure 8, a locking effect is created.

Figure 9 represents how a flexible tube 14 with diameter D2 is locked in the sprout piece 16. To this aim, this tube 14 is slid into the sprout piece 16, resulting in that the locking parts 20 first are pushed sideways and subsequently elastically engage in one of the grooves 35 of the corrugated surface 22, as a result of which, as illustrated in figure 9, a locking effect is created. The flexible tube 14 can maximally be pushed up to the stop 27, as a result of which it is excluded that the locking parts 19 are moved too far apart and might break.

As the free edge 23 of the sprout piece 16 is closed along the entire circumference, it is impossible that the tubes 13-14-32-33 might end up in the sprout piece 16 in a faulty manner, and they even are forced to take place in the seat 24 or 25.

It is noted that, by pulling sufficiently hard at the flexible tube 13 or 14, said tube can be removed again, such that, in case of a faulty mounting, a reinstallation can be performed.

It is also noted that not all entrances of the flush-mounted box 1 must be equipped with such twofold locking means 12.

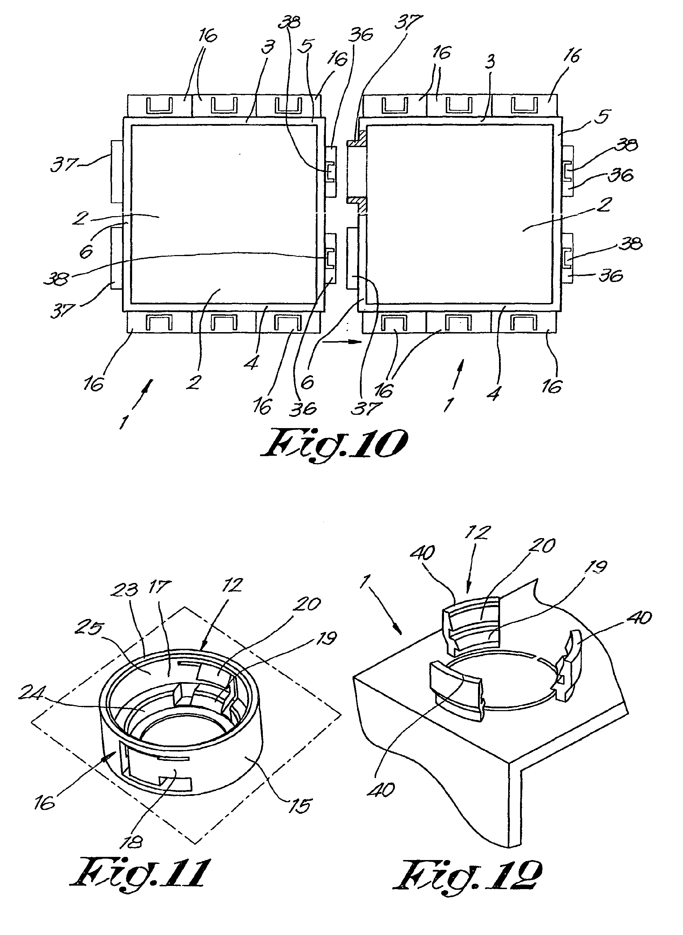

As represented in figures 1 and 10, at the side walls 3 and 4 exclusively sprout pieces 16 are provided which comprise locking means 12 which can cooperate with tubes of two diameters.

At two other side walls, in this case, the side walls 5 and 6, the flush-mounted box 1 comprises sprout pieces 36 and 37 of mutually differing diameter, such that, when two of such flush-mounted boxes 1 are presented with the sides 5 and 6 against each other, more particularly, such as represented in figure 10, these can be interconnected by inserting their sprout pieces 36-27 into each other. For each pair of sprout pieces 36-37 fitting into each other, the smallest sprout piece 36, as represented, preferably exclusively offers a seat for tubes, more particularly flexible tubes, of the aforementioned smallest diameter D1, whereas the largest sprout piece 37 preferably exclusively offers a seat for tubes of the aforementioned largest diameter D2.

Hereby, each sprout piece 36, as represented, can be provided with locking means which can cooperate with flexible tubes of the diameter D1, which locking means then, for example, are formed by one or more bendable lips 38 which, at their inner side, then exclusively have one locking part 39 which can be compared to said locking part 19. According to a variant, these locking means may be omitted at the sprout pieces 36.

The sprout pieces 37 can be realized without as well as with locking means. In the represented example, they comprise no locking means. In the case that locking means will be applied, these can have locking parts which can cooperate exclusively with tubes of the larger diameter, to wit D2, as well as have locking parts which can cooperate with tubes of both diameters D1 and D2, which then can be realized analogous to the locking means of the sprout pieces 16.

The sprout pieces 36 and 37 allow a mutual coupling of the flush-mounted boxes 1, for example, in horizontal position. By providing in the sprout pieces 36 exclusively locking means for tubes with a small diameter and preferably providing no locking means in the sprout pieces 37, or by possibly limiting those to locking means which exclusively are intended for tubes with the diameter D2, the distance, with which the sprout pieces 36 and 37 protrude from the flush-mounted box 1, can be kept rather small, with the advantage that, without a considerable loss of space in the flush-mounted boxes 1 themselves, in the coupled condition of these flush-mounted boxes 1, easily a core distance of 71 mm between the two flush-mounted boxes 1 can be guaranteed.

In figure 11, a variant of a sprout piece 16 is represented, whereby the bendable lips 17-18 extend in transverse direction, more particularly tangentially or radially. In this case, too, each time two separate locking means 19 and 20 for flexible tubes 13-14, with diameters D1 and D2, respectively, are provided on these lips 17 and 18.

It is noted that the locking means 12 according to the invention do not necessarily have to be realized in combination with a cylindrical sprout piece 16. These locking means can also be integrated in other forms of axially protruding, seat-forming edge structures consisting of one or more parts, which structures are provided around an entrance. In figure 12, an example thereof is represented, whereby the aforementioned locking parts 19 and 20 are provided on lips 40 which directly protrude from the respective side wall of the flush-mounted box 1. Hereby, the lips 39 at the same time form a seat-forming edge structure.

It is also noted that the locking parts 19 and 20, viewed according to the axial direction of the respective entrance, preferably are always situated concentrically, however, according to the axial direction, are situated at different locations P1 and P2.

Although the aforementioned locking parts 19 and 20 preferably are provided on elastically bendable lips 17-18-39, it is noted that this elastic bendability can be very small. Also, it is not excluded to realize the locking parts 19 and 20 as fixed protrusions situated at the inside of the seats 24-25, whereby, for snapping-on the flexible tubes 13-14, the elasticity of the seats 24-25 and/or the elasticity of the flexible tubes 13-14 is used.

According to a not-represented variant of the invention, the locking means, instead of having separate locking parts 19 and 20, can be provided with common locking parts. So, for example, the sprout piece 16 may be provided with only one continuous seat with diameter D4, whereas on the lips 17-18, exclusively locking parts 19 are present, which then can provide for the locking of flexible tubes 13 with diameter D1, as well as for the locking of flexbile tubes 14 with diameter D2. A proviso then will be that the lips 17-18 are sufficiently elastically bendable in order to be able to cooperate with both diameters of the tubes 13-14.

The present invention is in no way limited to the forms of embodiment described as an example and represented in the figures, however, such flush-mounted box can be realized according to various variants, without leaving the scope of the invention.

## Claims

1. Flush-mounted box for electrical elements, of the type consisting of a box-shaped housing with one or more entrances (7-8-9-10) integrated in the walls (3-4-5-6) of the housing, whereby at least one of these entrances comprises locking means (12) which can cooperate with flexible tubes (13-14) of at least two different diameters (D1-D2), whereby the aforementioned locking means (12), in respect to the locking of the flexible tubes (13) with the smallest of said two diameters (D1), as well as in respect to the locking of the flexible tubes (14) with the largest of said at least two diameters (D2), are of a permanently usable kind, and the locking means (12) comprise separate locking parts (19-20) for the at least two diameters (D1-D2), whereby the locking means (12) consist of one or more elastically bendable lips (17-18) with inwardly protruding locking parts (19-20) which can cooperate with the corrugated surface (21-22) of a flexible tube (13-14), **characterized in that** the locking means (12) have separate locking parts (19-20) for the at least two diameters (D1-D2), which, however, are commonly present on one or more of the bendable lips (17-18).

2. Flush-mounted box according to claim 1, **characterized in that** the locking means (12) are integrated in an axially protruding, seat-forming edge structure consisting of one or more parts.

3. Flush-mounted box according to claim 2, **characterized in that** said edge structure is realized as a sprout piece (16) and that said locking means (12) are integrated in the wall (15) of this sprout piece (16).

4. Flush-mounted box according to claim 2 or 3, **characterized in that** the locking means (12) are present on at least two diametrically opposed locations around the entrance (7-8).

5. Flush-mounted box according to claim 1, **characterized in that** said bendable lip or lips (17-18) extend in axial direction.

6. Flush-mounted box according to claim 5, **characterized in that** the locking means (12) have one or more lips (17-18) which are directed with their free extremities (28) towards the box-shaped housing.

7. Flush-mounted box according to claim 1, **characterized in that** said bendable lip or lips (17-18) extend in transverse direction, more particularly tangentially or radially.

8. Flush-mounted box according to any of the claims 1 to 7, **characterized in that** said edge structure is realized as a sprout piece (16) and that this sprout piece (16) has a foremost free edge (23) which is closed along the entire circumference.

9. Flush-mounted box according to any of the claims 2 to 8, **characterized in that** said edge structure, more particularly the sprout piece (16), comprises at least two seats (24-25) with different diameter (D3-D4), which, according to the axial direction, are situated one behind the other, and that the locking means (12) comprise separate locking parts (19-20) for the two diameters (D1-D2) of tubes (13-14), whereby these locking parts (19-20) are situated at the location of said two seats (24-25), respectively.

10. Flush-mounted box according to claim 9, **characterized in that** the seat (25) with the largest diameter (D4) is situated closest to the free edge (23) of the respective edge structure, more particularly of the sprout piece (16).

11. Flush-mounted box according to any of the claims 2 to 8, **characterized in that** the locking means (12) comprise separate locking parts (19-20) for the two diameters (D1-D2) of tubes (13-14), and that those, viewed according to the axial direction, are provided at different locations (P1-P2).

12. Flush-mounted box according to any of the claims 2 to 11, **characterized in that** said seat-forming edge structure and the locking means (12) allow that rigid tubes (32-33), as well as flexible tubes (13-14) can be provided with their extremities in the edge structure.

13. Flush-mounted box according to any of the claims 2 to 12, **characterized in that** said edge structure, as well as the integrated locking means (12), together with the pertaining wall part of the box-shaped housing, are realized in synthetic material, in one piece.

14. Flush-mounted box according to any of the claims 2 to 13, **characterized in that** the edge structure can cooperate with tubes and flexible tubes (13-14) with a first diameter of 16 mm and/or 5/8 inches, and with a second diameter of 20 mm and/or 3/4 inches.

15. Flush-mounted box according to any of the preceding claims, **characterized in that**, at two opposed sides (3-4), it shows one or more sprout pieces (16), which, as aforementioned, can cooperate with tubes of two diameters (D1-D2), whereas, at two other opposed sides (5-6), it comprises sprout pieces (36-37) of mutually differing diameter, such that, when two of such flush-mounted boxes (1) are presented with the last-mentioned sides (5-6) against each other, can be plugged with their sprout pieces (36-37) into each other, whereby at least, of the sprout pieces (36-37) fitting into each other, the smallest sprout piece (36) offers a seat and comprises locking means for tubes, more particularly flexible tubes (13), of the aforementioned smallest diameter (D1), whereas the largest sprout piece (37) of the sprout pieces (36-37) fitting into each other either does not comprise any locking means, or one or more locking means, for one or more diameters of tubes (D1 and/or D2), respectively, as well as respective seats for such tubes.

## Patentansprüche

1. Einbaudose für elektrische Elemente, des Typs, bestehend aus einem dosenförmigen Gehäuse mit einem oder mehr, in den Wänden (3-4-5-6) des Gehäuses integrierten Eingängen (7-8-9-10), wobei mindestens einer dieser Eingänge Verriegelungsmittel (12) umfasst, die mit flexiblen Rohren (13-14) mit mindestens zwei verschiedenen Durchmessern (D1-D2) zusammenwirken können, wobei die vorgenannten Verriegelungsmittel (12) sowohl in Bezug auf die Verriegelung der flexiblen Rohre (13) mit dem kleinsten der besagten zwei Durchmesser (D1), als auch in Bezug auf die Verriegelung der flexiblen Rohre (14) mit dem größten der besagten mindestens zwei Durchmesser (D2) von permanent nutzbarer Art sind und die Verriegelungsmittel (12) getrennte Verriegelungsteile (19-20) für die mindestens zwei Durchmesser (D1-D2) umfassen, wobei die Verriegelungsmittel (12) aus einer oder mehr elastisch verbiegbaren Lippen (17-18) mit nach innen ragenden Verriegelungsteilen (19-20) bestehen, die mit der gerippten Oberfläche (21-22) eines flexiblen Rohrs (13-14) zusammenwirken können, **dadurch gekennzeichnet, dass** die Verriegelungsmittel (12) getrennte Verriegelungsteile (19-20) für die mindestens zwei Durchmesser (D1-D2) aufweisen, die jedoch gemeinsam an einer oder mehr der biegsamen Lippen (17-18) vorkommen.

2. Einbaudose nach Anspruch 1, **dadurch gekennzeichnet, dass** die Verriegelungsmittel (12) in eine aus einem oder mehreren Teilen bestehende, axial vorragende, einen Sitz bildende Randstruktur integriert sind.

3. Einbaudose nach Anspruch 2, **dadurch gekennzeichnet, dass** besagte Randstruktur als ein Stutzen (16) verwirklicht ist und dass besagte Verriegelungsmittel (12) in die Wand (15) dieses Stutzens (16) integriert sind.

4. Einbaudose nach Anspruch 2 oder 3, **dadurch gekennzeichnet, dass** die Verriegelungsmittel (12) an mindestens zwei einander diametral entgegengesetzten Stellen um den Eingang (7-8) vorhanden sind.

5. Einbaudose nach Anspruch 1, **dadurch gekennzeichnet, dass** besagte biegsame Lippe oder Lippen (17-18) sich in axialer Richtung erstrecken.

6. Einbaudose nach Anspruch 5, **dadurch gekennzeichnet, dass** die Verriegelungsmittel (12) eine oder mehrere Lippen (17-18) aufweisen, die mit ihren freien Enden (28) zu dem dosenförmigen Gehäuse gerichtet sind.

7. Einbaudose nach Anspruch 1, **dadurch gekennzeichnet, dass** besagte biegsame Lippe oder Lippen (17-18) sich in Querrichtung, spezieller tangential oder radial, erstrecken.

8. Einbaudose nach einem der Ansprüche 1 bis 7, **dadurch gekennzeichnet, dass** besagte Randstruktur als ein Stutzen (16) verwirklicht ist und dass dieser Stutzen (16) einen vorderen freien Rand (23) aufweist, der um den gesamten Umfang herum geschlossen ist.

9. Einbaudose nach einem der Ansprüche 2 bis 8, **dadurch gekennzeichnet, dass** besagte Randstruktur, spezieller der Stutzen (16), mindestens zwei Sitze (24-25) mit unterschiedlichem Durchmesser (D3-D4) umfasst, die sich in axialer Richtung hintereinander befinden, und dass die Verriegelungsmittel (12) getrennte Verriegelungsteile (19-20) für die zwei Durchmesser (D1-D2) von Rohren (13-14) umfassen, wobei diese Verriegelungsteile (19-20) sich jeweils an der Stelle der besagten zwei Sitze (24-25) befinden.

10. Einbaudose nach Anspruch 9, **dadurch gekennzeichnet, dass** der Sitz (25) mit dem größten Durchmesser (D4) sich am dichtesten bei dem freien Rand (23) der jeweiligen Randstruktur, spezieller des Stutzens (16), befindet.

11. Einbaudose nach einem der Ansprüche 2 bis 8, **dadurch gekennzeichnet, dass** die Verriegelungsmittel (12) getrennte Verriegelungsteile (19-20) für die zwei Durchmesser (D1-D2) von Rohren (13-14) umfassen und dass diese, in axialer Richtung gesehen, an unterschiedlichen Stellen (P1-P2) angebracht sind.

12. Einbaudose nach einem der Ansprüche 2 bis 11, **dadurch gekennzeichnet, dass** besagte sitzformende Randstruktur und die Verriegelungsmittel (12) zulassen, dass sowohl starre Rohre (32-33) als auch flexible Rohre (13-14) mit ihren Enden in der Randstruktur angebracht werden können.

13. Einbaudose nach einem der Ansprüche 2 bis 12, **dadurch gekennzeichnet, dass** besagte Randstruktur sowie die integrierten Verriegelungsmittel (12) zusammen mit dem zugehörigen Wandteil des dosenförmigen Gehäuses einstückig aus Kunststoff ausgeführt sind.

14. Einbaudose nach einem der Ansprüche 2 bis 13, **dadurch gekennzeichnet, dass** die Randstruktur mit Rohren und flexiblen Rohren (13-14) mit einem ersten Durchmesser von 16 mm und/oder 5/8 Zoll und mit einem zweiten Durchmesser von 20 mm und/oder 3/4 Zoll zusammenwirken kann.

15. Einbaudose nach einem der vorgenannten Ansprüche, **dadurch gekennzeichnet, dass** sie an zwei gegenüberliegenden Seiten (3-4) einen oder mehr Stutzen (16) aufweist, die, wie vorgenannt, mit Rohren mit zwei Durchmessern (D1-D2) zusammenwirken können, während sie an zwei anderen gegenüberliegenden Seiten (5-6) Stutzen (36-37) mit voneinander verschiedenem Durchmesser umfasst, sodass, wenn zwei solche Einbaudosen (1) mit den letztgenannten Seiten (5-6) gegeneinander präsentiert werden, sie mit ihren Stutzen (36-37) ineinandergesteckt werden können, wobei mindestens, von den ineinanderpassenden Stutzen (36-37), der kleinste Stutzen (36) einen Sitz bietet und Verriegelungsmittel für Rohre, spezieller für flexible Rohre (13), mit dem vorgenannten kleinsten Durchmesser (D1) umfasst, während der größte Stutzen (37) der ineinanderpassenden Stutzen (36-37) entweder keine Verriegelungsmittel oder ein oder mehr Verriegelungsmittel für einen oder mehrere Durchmesser von Rohren (D1 und/oder D2) sowie jeweilige Sitze für solche Rohre besitzt.

## Revendications

1. Boîtier encastré pour des éléments électriques, du type constitué d'un logement en forme de boîte comprenant une ou plusieurs entrées (7-8-9-10) intégré dans les parois (3-4-5-6) du logement, au moins une de ces entrées comprenant des moyens de verrouillage (12) qui peuvent coopérer avec des tubes flexibles (13-14) d'au moins deux diamètres différents (D1-D2), les moyens de verrouillage susmentionnés (12), en ce qui concerne le verrouillage des tubes flexibles (13) possédant le plus petit desdits deux diamètres (D1), et en ce qui concerne verrouillage des tubes flexibles (14) possédant le plus grand desdits au moins deux diamètres (D2), étant du type à usage permanent, et les moyens de verrouillage (12) comprenant des éléments de verrouillage séparés (19, 20) pour lesdits au moins deux diamètres (D1-D2), les moyens de verrouillage (12) étant constitués par une ou plusieurs lèvres (17-18) manifestant une aptitude au fléchissement élastique comprenant des éléments de verrouillage (19-20) faisant saillie vers l'intérieur, qui peuvent coopérer avec la surface ondulée (21-22) d'un tube flexible (13-14), **caractérisé en ce que** les moyens de verrouillage (12) possèdent des éléments de verrouillage séparés (19-20) pour lesdits au moins deux diamètres (D1-D2) qui toutefois sont présents en commun sur une ou plusieurs des lèvres (17-18) aptes à fléchir.

2. Boîtier encastré selon la revendication 1, **caractérisé en ce que** les moyens de verrouillage (12) sont intégrés dans une structure marginale formant un siège et faisant saillie en direction axiale, qui est constituée par une ou plusieurs parties.

3. Boîtier encastré selon la revendication 2, **caractérisé en ce que** ladite structure marginale est réalisée sous la forme d'une pièce saillante (16) et **en ce que** lesdits moyens de verrouillage (12) sont intégrés dans la paroi (15) de cette pièce saillante (16).

4. Boîtier encastré selon la revendication 2 ou 3, **caractérisé en ce que** les moyens de verrouillage (12) sont présents à au moins deux endroits diamétralement opposés autour de l'entrée (7-8).

5. Boîtier encastré selon la revendication 1, **caractérisé en ce que** ladite ou lesdites lèvres aptes à fléchir (17-18) s'étendent en direction axiale.

6. Boîtier encastré selon la revendication 5, **caractérisé en ce que** les moyens de verrouillage (12) possèdent une ou plusieurs lèvres (17-18) qui sont orientées avec leurs extrémités libres (28) dans la direction du logement en forme de boîte.

7. Boîtier encastré selon la revendication 1, **caractérisé en ce que** ladite ou lesdites lèvres aptes à fléchir (17-18) s'étendent en direction transversale, plus particulièrement en direction tangentielle ou en direction radiale.

8. Boîtier encastré selon l'une quelconque des revendications 1 à 7, **caractérisé en ce que** ladite structure marginale est réalisée sous la forme d'une pièce saillante (16), et **en ce que** cette pièce saillante (16) possède un bord libre frontal (23) qui est fermé sur toute sa circonférence.

9. Boîtier encastré selon l'une quelconque des revendications 2 à 8, **caractérisé en ce que** ladite structure marginale, plus particulièrement la pièce saillante (16), comprend au moins deux sièges (24-25) possédant des diamètres différents (D3-D4), lesdits sièges, lorsqu'on regarde en direction axiale, étant situés l'un derrière l'autre, et **en ce que** les moyens de verrouillage (12) comprennent des éléments de verrouillage séparés (19-20) pour les deux diamètres (D1-D2) des tubes (13-14), ces éléments de verrouillage (19-20) étant situés à l'endroit desdits deux sièges (24-25), respectivement.

10. Boîtier encastré selon la revendication 9, **caractérisé en ce que** le siège (25) possédant le plus grand diamètre (D4) est situé le plus près du bord libre (23) de la structure marginale respective, plus particulièrement de la pièce saillante (16).

11. Boîtier encastré selon l'une quelconque des revendications 2 à 8, **caractérisé en ce que** les moyens de verrouillage (12) comprennent des éléments de verrouillage séparés (19-20) pour les deux diamètres (D1-D2) des tubes (13-14), et **en ce que** ceux que l'on peut voir, lorsqu'on regarde en direction axiale, sont prévus à des endroits différents (P1-P2).

12. Boîtier encastré selon l'une quelconque des revendications 2 à 11, **caractérisé en ce que** ladite structure marginale formant un siège ainsi que les moyens de verrouillage (12) permettent l'insertion aussi bien de tubes rigides (32-33) que de tubes flexibles (13-14) avec leurs extrémités dans la structure marginale.

13. Boîtier encastré selon l'une quelconque des revendications 2 à 12, **caractérisé en ce que** ladite structure marginale, ainsi que les moyens de verrouillage intégrés (12), conjointement avec la partie de paroi correspondante du logement en forme de boîte, sont réalisés en une matière synthétique, en une seule pièce.

14. Boîtier encastré selon l'une quelconque des revendications 2 à 13, **caractérisé en ce que** la structure marginale peut coopérer avec des tubes et avec des tubes flexibles (13-14) possédant un premier diamètre de 16 mm et/ou de 5/8 de pouce et un deuxième diamètre de 20 mm et/ou de 3/4 de pouce.

15. Boîtier encastré selon l'une quelconque des revendications précédentes, **caractérisé en ce que**, à deux côtés opposés (3-4), il présente une ou plusieurs pièces saillantes (16) qui, comme on l'a mentionné ci-dessus, peuvent coopérer avec des tubes possédant deux diamètres (D1-D2), tandis que, aux deux autres côtés opposés (5-6), il comprend des pièces saillantes (36-37) de diamètres réciproquement différents, de telle sorte que, lorsque deux boîtiers encastrés (1) de ce type sont présentés avec les côtés mentionnés en dernier lieu (5-6) l'un contre l'autre, ils peuvent être montés avec leurs pièces saillantes (36-37) insérées l'une dans l'autre, dans lequel, parmi les pièces saillantes (36-37) venant s'insérer l'une dans l'autre, au moins la plus petite pièce saillante (36) offre un siège et comprend des moyens de verrouillage pour des tubes, plus particulièrement des tubes flexibles (13) possédant le plus petit diamètre susmentionné (D1), tandis que la pièce saillante la plus grande (37) desdites pièces saillantes (36-37) venant s'insérer l'une dans l'autre, soit ne comprend aucun moyen de verrouillage ou bien comprend un ou plusieurs moyens de verrouillage pour un ou plusieurs diamètres de tubes (D1 et/ou D2), respectivement, ainsi que des sièges respectifs pour lesdits tubes.
